(19) Europäisches Patentamt

European Patent Office

Office européen des brevets

(11) **EP 1 580 520 A1**

(12) **EUROPEAN PATENT APPLICATION**
published in accordance with Art. 158(3) EPC

(43) Date of publication:
28.09.2005 Bulletin 2005/39

(51) Int Cl.⁷: **G01B 11/00**

(21) Application number: 03778951.8

(22) Date of filing: 16.12.2003

(86) International application number:
**PCT/JP2003/016078**

(87) International publication number:
**WO 2004/061387 (22.07.2004 Gazette 2004/30)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 27.12.2002 JP 2002379536

(71) Applicant: **Arisawa, Hiroshi**
**Tokyo 146-0084 (JP)**

(72) Inventors:
• **ARISAWA, Hiroshi**
**Ohta-ku, Tokyo 146-0084 (JP)**
• **SAKAKI, Kazunori**
**Room 2-105, Leopalace Nishiya**
**Yokohama-shi, Kanagawa 240-0052 (JP)**

(74) Representative: **Strehl Schübel-Hopf & Partner**
**Maximilianstrasse 54**
**80538 München (DE)**

(54) **MULTI-VIEW-POINT VIDEO CAPTURING SYSTEM**

(57) The present invention reduces the burden on a target object such as a test subject by acquiring multi perspective video image data by photographing the target object by means of a plurality of cameras and acquires the actual movement including a picture of the target object independently of the measurement environment by acquiring camera parameters such as the attitude and zoom of the camera along with picture data. By acquiring video image data by synchronizing a plurality of cameras during photographing by the cameras and at the same time acquiring camera parameters in sync with the video image data, rather than simply acquiring video image data and camera parameters, the present invention acquires the actual movement of the target object independently of the measurement environment and acquires the movement of the video image itself of the target object rather than movement of only representative points.

Fig. 1

**Description**

TECHNICAL FIELD

The present invention relates to a system for acquiring video information and a storage medium and, more particularly, to a multi perspective video capture system for capturing and storing picture information afforded from the multiple viewpoints, a storage medium for a program that controls the multi perspective video capture system, and a storage medium for storing video information.

BACKGROUND ART

In a variety of fields such as sport in addition to manufacturing and medicine, a physical body in the real world is captured by a processor and a variety of processes may be attempted on a processor. For example, information on the movement of a person or thing and the shape of the physical body is captured and used in the analysis of the movement of the person or thing and in the formation of imaginary spaces, and so forth.

However, because operations are performed in a variety of environments, the person or physical body that is to be actually evaluated is not necessarily in a place that is suitable for capturing information. Further, in order to capture the phenomenon in which the real world is made with a processor as is, it is necessary to not generate obstacles to the operation and not take time for target objects such as people and objects and the peripheral environment thereof.

Conventionally, a procedure known as motion capture is known as the procedure for capturing an object in such a real world on a computer. This motion capture simulates the movement of a moving body such as a person. As a motion capture device, Japanese Patent Kokai Publication No. 2000-321044 (paragraph numbers 0002 to 0005), for example, is known. Japanese Patent Kokai Publication No. 2000-321044 mentions, as motion capture systems, optical, mechanical, and magnetic systems that are known as representative examples of motion capture, for example, and in the motion capture of an optical system, a marker is attached in the location in which the movement of the body of an actor is to be measured and the movement of each portion is measured from the position of the marker by imaging the marker by means of a camera. In mechanical motion capture, an angle detector and pressure-sensitive device are attached to the body of the actor and the movement of the actor is detected by detecting the bend angle of the joints. In magnetic motion capture, a magnetic sensor is attached to each part of the actor's own body, the actor is moved in an artificially generated magnetic field and the actor's movement is detected by deriving the absolute position in which the magnetic sensor exists by detecting the density and angle of the lines of magnetic force by means of a magnetic sensor.

DISCLOSURE OF THE INVENTION

In the case of conventionally known motion capture, the attachment of special markers in positions in which the body of the test subject is determined in an optical system, the placement of a camera in the periphery of the target object on the basis of homogeneous light, the placement of the target object in an artificially generated magnetic field in a magnetic system, the attachment of an angle detector and pressure sensitive device to the body of the test subject in a mechanical system, and the fact that calibration (correction), which performs correction of the actual position and pixel positions in the camera image, takes time, and so forth, necessitate a special environment, and there is the problem that the burden on the test subject and party performing the measurement is great.

In addition, in conventional motion capture, positional information of only representative points determined for the target object is measured, and movement is detected on that basis. Picture information for the target object is not included. Although conventional motion capture of an optical system comprises a camera, this camera acquires position information on markers that are attached in representative positions from an image of a target object such as a test subject, the image data of the target object is discarded, and the original movement of the target object is not captured. As a result, the movement of the target object that is obtained in conventional motion capture is represented in a wire-frame form, for example, and there is a problem that the original movement of the target object cannot be reproduced.

Furthermore, in a conventional system, a high-cost camera is required in order to capture an image of the target object highly accurately and a more expensive camera is required in order to capture an image of a wide area in particular.

In order to acquire the position and attitude of the target object by using images that are picked up by a video camera, it is necessary to analyze the position and attitude of the target object that is photographed over individual frames for a row of images (frames). The analytical accuracy generally increases as larger photographs of the subject are taken. The reason is that the shift in the position of the real world of the subject is reflected as a shift in the position on the frame (pixel position) as the proportion of the subject with respect to the viewing angle increases.

One method for increasing the accuracy is a method for increasing the accuracy of the pixels on the frame. However, this method limits the performance of the pickup element of the video camera and is confronted by the problem that the data amount of the image transmission increases excessively and is therefore not practical. Therefore, in order to capture a large subject, the cameraman may move (pan, tilt) the viewing field of the camera or zoom in. In addition, the camera itself may also be moved in accordance with the movement of the subject.

However, when the camera parameters such as pan, tilt, zoom, and the movement of the camera itself are changed during photography, there is the problem that analysis of the position and attitude is impossible. In a normal analysis method, data that is known as the camera parameters such as the spatial position, line of sight, breadth of field (found from the focal length) of the camera are initially captured and a calculation formula (calibration formula) for combining the camera parameters and the results of the image analysis on individual frames (position on the subject) is created to calculate the subject's position in the real world. In addition, a space position can be estimated by performing this calculation on frame data of two or more video cameras. In such calculation of the subject's position, when the camera parameters change during photography, it is not possible to accurately calibrate the image data.

Therefore, the present invention resolves the above conventional problem and an object thereof is to acquire the actual movement including a picture image of the target object independently of the measurement environment. A further object is to acquire a wide-range picture highly accurately without using a highly expensive camera.

The present invention reduces the burden on a target object such as a test subject by acquiring multi perspective video images data by photographing the target object by means of a plurality of cameras and acquires the actual movement including a picture of the target object independently of the measurement environment by acquiring camera parameters such as the attitude and zoom of the camera along with picture data.

The present invention acquires video image data by synchronizing a plurality of cameras during photographing by the cameras and at the same time acquires camera parameters for each frame in sync with the video image data, rather than simply acquiring video image data and camera parameters, and therefore is capable of acquiring the actual movement of the target object independently of the measurement environment and of acquiring the movement of the picture itself of the target object rather than movement of only representative points.

The present invention comprises the respective aspects of a multi perspective video capture system (multi perspective video image system) for acquiring video information of the target object from multi perspective, a storage medium for a program that causes a computer to execute control to acquire video information of the target object from multi perspective, and a storage medium for storing video information of the target object acquired from multi perspective.

A first aspect of the multi perspective video capture system (multi perspective video image system) of the present invention is a video capture system that acquires video information on a target object from multi perspective, wherein mutually association information is added to video image data that is acquired from a plurality of cameras that operate in sync with one another and to the camera parameters of each camera to the data is outputted. The outputted video image data and camera parameters can be stored and picture data and camera parameters are stored for each frame.

A second aspect of the multi perspective video capture system of the present invention is a video capture system that acquires video information of the target object from multi perspective that is constituted comprising a plurality of cameras for acquiring moving images, detector for acquiring the camera parameters of each camera; synchronizer for acquiring moving images by synchronizing a plurality of cameras; data appending device that make associations between the video data of each camera and between the video image data and camera parameters.

Video image data is acquired by synchronizing a plurality of cameras by means of the synchronizer means and respective video image data acquired by each camera are synchronized by the data appending device and the video image data and camera parameters are synchronized. As a result, the video image data and camera parameters of a plurality of cameras of the same time can be found.

Furthermore, the second aspect further comprises video image data storage for storing video image data rendered by adding association information for each frame and camera parameter storage for storing camera parameters rendered by adding association information. According to this aspect, video image data and camera parameters including mutually association information can be stored. Further, for the video image data storage and camera parameter storage, different storage or the same storage can be assumed. Further, when the same storage are used, video image data and camera parameters can each be stored in different regions or can be stored in the same region.

In the above aspect, it can be assumed that the association information is the frame count of video image data that is acquired by one camera of a plurality of cameras. By referencing the frame count, the association between the respective frames of the video image data that is acquired from a plurality of cameras is known and, in addition to being able to process picture data at the same time in sync, camera parameter data that corresponds with the video image data of the same time can be found and processed in sync.

The camera parameters contain camera attitude information of camera pan and tilt and zoom information. Pan is the oscillation angle in the lateral direction of the camera, for example, and tilt is the oscillation angle in the vertical direction of the camera, for example, where pan and tilt are attitude information relating to the imaging directions in which the camera performs imaging. Further, the zoom information is the focal position of the camera, for example, and is information relating to the viewing field range that is captured on the imaging screen of the camera. The attitude information of the camera makes it possible to know the pickup range in which the camera performs imaging in accordance with zoom information.

The present invention comprises, as camera parameters, zoom information in addition to the camera attitude information of pan and tilt and is therefore able to obtain both an increase in the resolution of the video image data and an enlargement of the acquisition range.

In addition, the multi perspective video capture system of the present invention can also include two-dimensional or three-dimensional position information for the camera as the camera parameters. On account of including the position information, even in a case where the camera itself has moved in a space, the spatial relationship between the picture data of each camera can be grasped and picture information can be acquired over a wide range with a small number of cameras. In addition, image information can be acquired while tracking a moving target object.

Further, in addition to the above camera parameters, the data that is stored for each frame can also be data of every kind such as measurement data and measured measurement data can be stored in sync with picture data and camera parameters.

An aspect of the program storage medium of the present invention is a storage medium for a program that causes a computer to execute control to acquire video information of a target object from multi perspective, comprising first program encoder that sequentially add a synchronization common frame count to video image data of each frame acquired from a plurality of cameras; and second program encoder that sequentially add a frame count corresponding to the video image data to the camera parameters of each camera.

The first program encoder include the storage in first storage of picture data to which a frame count has been added and the second program encoder include the storage in second storage of count parameters to which a frame count has been added. This program controls processing executed by the data appending device.

Furthermore, the camera parameters include the camera attitude information of camera pan and tilt and zoom information. Further, the camera parameters may include camera two-dimensional or three-dimensional position information. In addition, for example, a variety of information on the photographic environment and periphery such as sound information, temperature, and level of humidity may be associated and stored with video image.

As a result of a constitution in which other information is associated and stored with video image data in addition to the camera parameters, a sensor for measuring the body temperature, the outside air temperature, and a variety of gases, for example, is provided on the clothes and measurement data that is formed by these sensors in addition to the video image data imaged by the camera is captured and then associated and stored with video image data, whereby video image data and measurement data at the same time can be easily analyzed.

Furthermore, the present invention is able to correct a shift in the camera parameters that results when the camera pans and tilts. This correction comprises the steps of acquiring an image in a plurality of rotational positions by panning and/or tilting a camera; finding correspondence between the focal position of the camera and the center position of the axis of rotation from the image; acquiring the camera parameters of the camera; and correcting the camera parameters on the basis of the correspondence.

An aspect of the storage medium of the video information of the present invention is a storage medium for storing video information of the target object that is acquired from multi perspective that stores first video information rendered by sequentially adding a synchronization common frame count to the video image data of the respective frames that is acquired from a plurality of cameras and second video information produced as a result of sequentially adding the frame count corresponding with video image data to the camera parameters of each camera. The camera parameters may include camera attitude information of camera pan and tilt and zoom information and may include camera two-dimensional or three-dimensional position information. Further, a variety of information that is associated with the video image data may be included.

It is possible to acquire video information without adding restrictive conditions such as the limited space of a studio or the like in order to render the measurement environment homogeneous light and facilitate correction.

The video information acquired by the present invention can be applied to the analysis of the movement and attitude and so forth of the target object.

BRIEF DESCRIPTION OF THE DRAWINGS

Fig. 1 is a constitutional view to illustrate an overview of the multi perspective video capture system of the present invention;

Fig. 2 shows an example of a constitution in which the multi perspective video capture system of the present invention comprises a plurality of cameras;

Fig. 3 serves to illustrate a picture that is imaged by a camera that the multi perspective video capture system of the present invention comprises;

Fig. 4 serves to illustrate pictures that are imaged by a camera that the multi perspective video capture system of the present invention comprises;

Fig. 5 is a constitutional view that serves to illustrate the multi perspective video capture system of the present invention;

Fig. 6 shows an example of a data array on a time axis that serves to illustrate the acquisition state of video image data and camera parameters of the present invention;

Fig. 7 shows an example of video image data and camera parameters that are stored in the storage of the present invention;

Fig. 8 shows an example of the format of video image data of the present invention and camera parameter communication data;

Fig. 9 shows an example of the structure of the camera parameter communication data of the present invention;

Fig. 10 is a schematic view that serves to illustrate the relationship between the center of revolution of the camera and the focal position of the camera;

Fig. 11 is a schematic view that serves to illustrate the relationship between the center of revolution and the focal position of the camera;

Fig. 12 is a schematic view that serves to illustrate the correction of the camera parameters in the calibration of the present invention;

Fig. 13 is a flowchart to illustrate a camera parameter correction procedure of the present invention;

Fig. 14 serves to illustrate the camera parameter correction procedure of the present invention;

Fig. 15 shows the relationship between a three-dimensional world coordinate system representing the coordinates of the real world and a camera-side two-dimensional coordinate system;

Fig. 16 serves to illustrate an example of the calculation of the center position from the focal position of the present invention;

Fig. 17 is an example of a reference subject of the present invention; and

Fig. 18 shows an example in which the camera of the present invention is moved three-dimensionally by means of a crane.

BEST MODE FOR CARRYING OUT THE INVENTION

An embodiment of the present invention will be described with reference to the attached drawings.

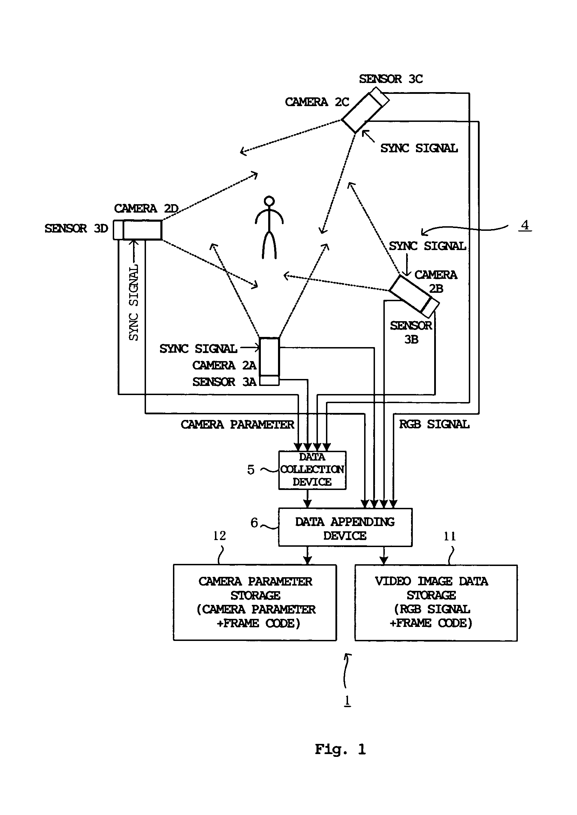

Fig. 1 is a constitutional view to illustrate an overview of the multi perspective video capture system (multi perspective video image system) of the present invention. In Fig. 1, a multi perspective video capture system 1 comprises a plurality of cameras 2 (cameras 2A to camera 2D are shown in Fig. 1) that acquire video image data for a moving image of the target object 10; a sensor 3 for acquiring camera parameters of each camera 2 (Fig. 1 shows sensors 3A to 3D); synchronizer 4 (only a synchronization signal is shown in Fig. 1) for acquiring a moving image by synchronizing a plurality of cameras 2; and data appending device 6 that make an association between the video image data of each camera 2 and the video image data and camera parameters. Mutually association information is added to video image data that is acquired from a plurality of cameras operating in sync with each other and to the camera parameters of each camera. The resulting data is then outputted.

The association information added by the data appending device 6 can be established on the basis of the frame count extracted from the video image data of one camera, for example. The frame count can be found by a frame counter device 7 described subsequently.

Further, the multi perspective video capture system 1 can comprise video image data storage 11 for storing video image data rendered as a result of association information being added by the data appending device 6 and camera parameter storage 12 that store camera parameters rendered as a result of association information being added by the data appending device 6.

The plurality of cameras 2A to 2D can be provided in an optional position in the periphery of the target object 10 and can be fixed or movable. The cameras 2A to 2D image the moving image of the target object 10 in sync by means of a synchronization signal generated by the synchronizer 4. Further, the synchronization is performed for each frame that is imaged by the camera 2 and can also be performed in predetermined frame units. As a result, video image data that is obtained from each of the cameras 2A to 2D is synchronized in frame units and becomes video image data of the same time. The video image data that is acquired by each camera 2 is collected by the data appending device 6.

Further, sensors 3A to 3D that detect camera parameters such as zoom information such as focal length and camera attitude information such as pan and tilt for each camera are provided for each of the cameras 2A to 2D and the camera parameters detected by each sensor 3 are collected by the data collection device 5.

The frame count used as association information makes it possible to capture video image data from one camera among a plurality of cameras 2 and to count and acquire each frame of the video image data. The acquired frame count constitutes information to provide associations between the respective video image data by synchronizing the video image data and information for associating video image data and camera parameters.

The data appending device 6 add association information that is formed on the basis of the frame count to the camera parameters collected by the video image data and data collection device 5. The video image data to which the association information is added is stored in the video image data storage 11 and the camera parameters to which the association information is added is stored in the camera parameter storage 12.

Further, the multi perspective video capture system 1 of the present invention can also have a constitution that does not comprise the video image data storage 11 and camera parameter storage 12 or can have a constitution that comprises the video image storage 11 and the camera parameter storage 12.

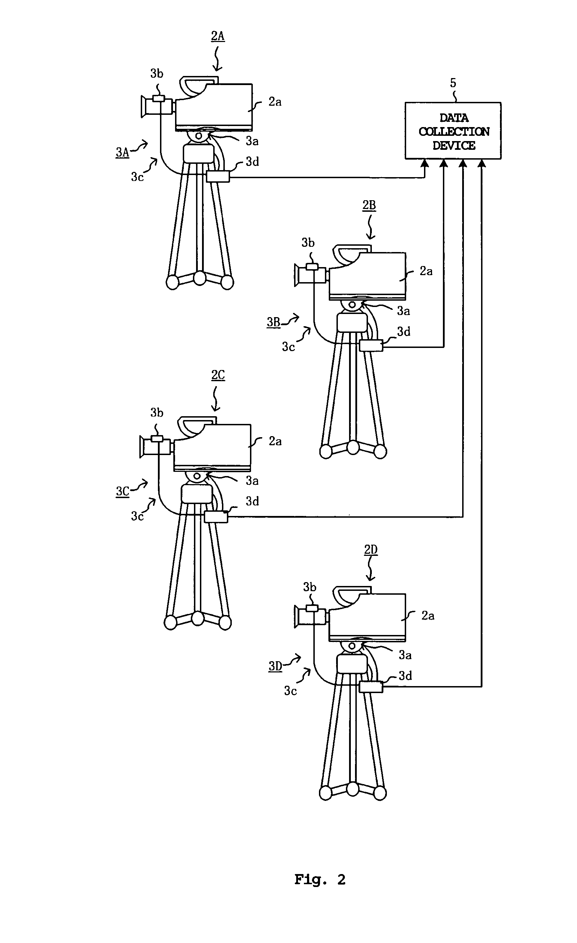

Fig. 2 shows an example of a constitution having a plurality of cameras that the multi perspective video capture system of the present invention comprises. Further, Fig. 2 shows an example of a constitution having four cameras which are cameras 2A to 2D as the plurality of cameras but the number of cameras can be an optional number of two or more. Camera 2A will be described as a representative example.

Camera 2A comprises a camera main body 2a and a sensor 3A for forming camera parameters is provided in the camera main body 2a. The sensor 3A comprises an attitude sensor 3a, a lens sensor 3b, a sensor cable 3c, and a data relay 3d. The camera main body 2a is supported on a camera platform which rotates or turns on at least two axes such that same is free to pan (oscillation in a horizontal direction) and tilt (oscillation in a vertical direction). Further, in cases where the cameras 2 are horizontally attached to a camera platform, pan becomes oscillation in a vertical direction and tilt becomes oscillation in a horizontal direction. The camera platform can also be installed on a tripod.

The attitude sensor 3a is a sensor for detecting the direction and angle of oscillation of the camera which detects and outputs the degree of oscillation of the camera 2A as pan information and tilt information by providing the attitude sensor 3a on the camera platform. Further, the lens sensor 3b is a sensor for detecting zoom information for the camera 2A and is capable of acquiring the zoom position of the lens by detecting the focal length, for example.

The attitude sensor 3a and lens sensor 3b can be constituted by rotary encoders having a coupled axis of rotation and detect the extent of rotation in any direction (right rotation direction and left rotation direction, for example) with respect to the reference rotation position, for example, by means of the rotation direction and rotation angle. Further, data on the rotation direction can be expressed by a positive (+) or negative (-) when the reference rotation direction is positive, for example. Further, the rotary encoder can also use the absolute angle position that is obtained by using the absolute type. Each of the camera parameters of pan, tilt and zoom that are obtained by the attitude sensor 3a and lens sensor 3b are collected by the data collecting device 5 after being collected by the data relay 3d via the sensor cable 3c.

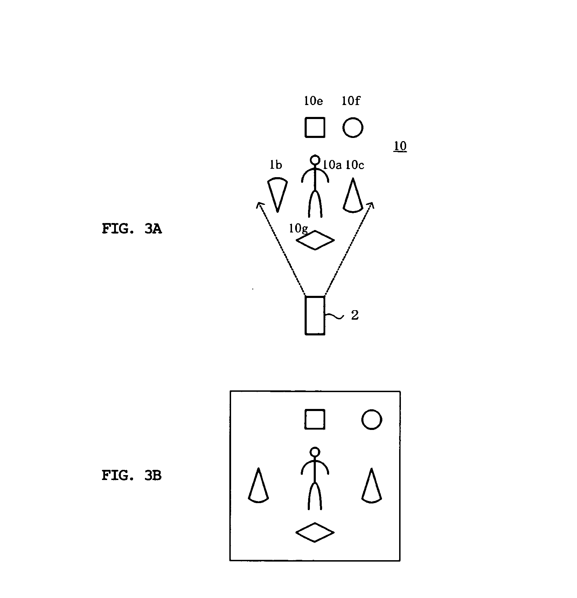

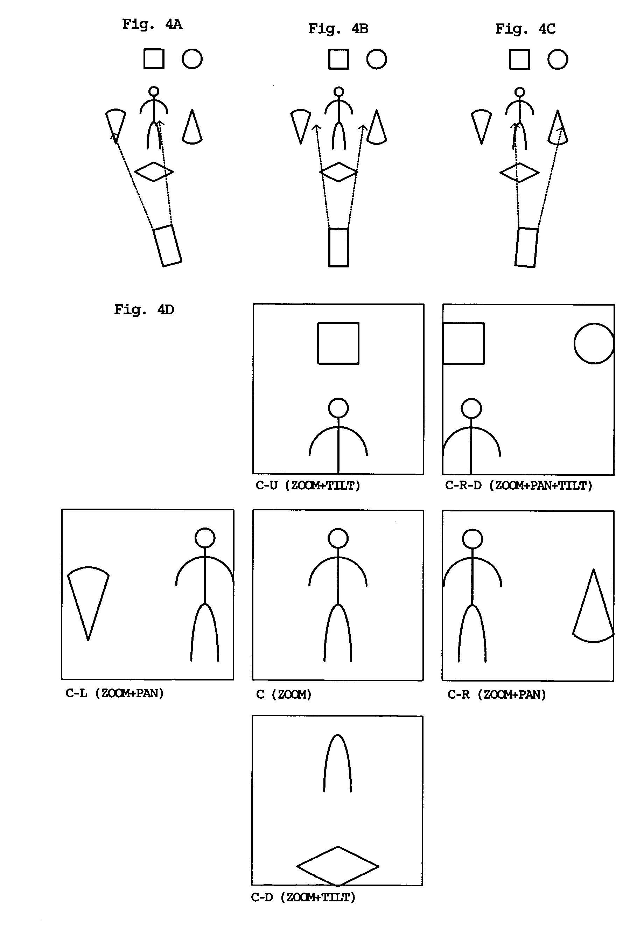

A picture that is obtained by the cameras of the multi perspective video capture system of the present invention will be described by using Figs. 3 and 4.

Fig. 3 shows a case where a wide viewing field is photographed by adjusting the zoom of the camera and Fig. 3B shows an example of picture data. In this case, instead of a wide viewing field being obtained, the size of each image is small. As a result, a more detailed observation of a target object 10a in the target object 10, for example, is difficult.

In this state, by enlarging the target object 10a in the target object 10 by means of the zoom function of the camera, the target object 10a can be observed with a high resolution but the viewing field range in turn narrows. The multi perspective video capture system of the present invention adjusts the problem of the contrariety of the image enlargement and narrowing of the viewing field range by using the pan and tilt camera attitude information and zoom information and secures a wider viewing field range by means of pan and tilt also in a case where an image is enlarged by means of the zoom.

Fig. 4 shows a state where the zoom, pan and tilt are combined. C in Fig. 4D shows an enlarged image of the target object 10a in a position in Fig. 4B. In order to widen the viewing field range narrowed by the zoom, by panning leftward as shown in Fig. 4A, for example, the leftward image shown in C-L in Fig. 4D can be acquired and, by panning rightward as shown in Fig. 4C, the rightward image shown in C-R in Fig. 4D can be acquired. Further, by tilting upward or downward, the upward and downward images shown in C-U and C-D respectively in Fig. 4D can be acquired. Further, by combining pan and tilt, the rightward upward image shown in C-R-U in Fig. 4D can be acquired.

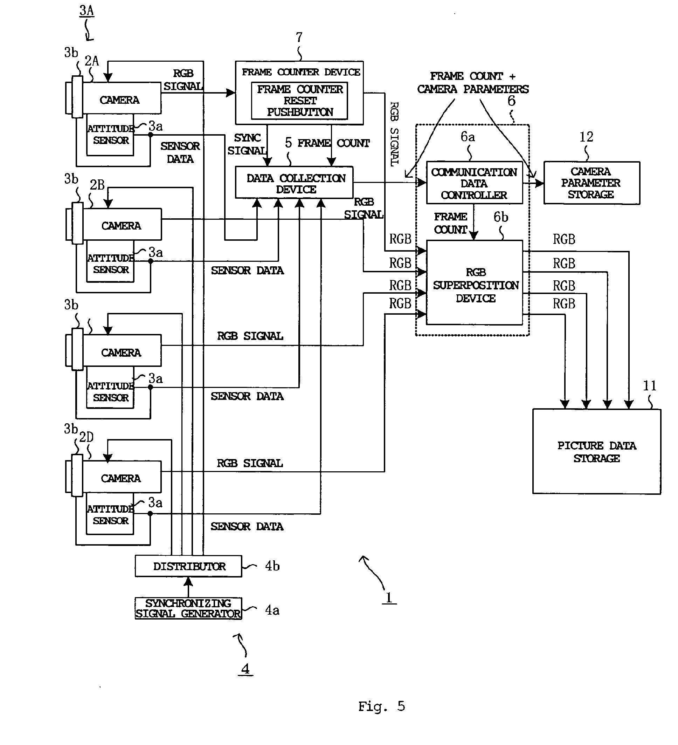

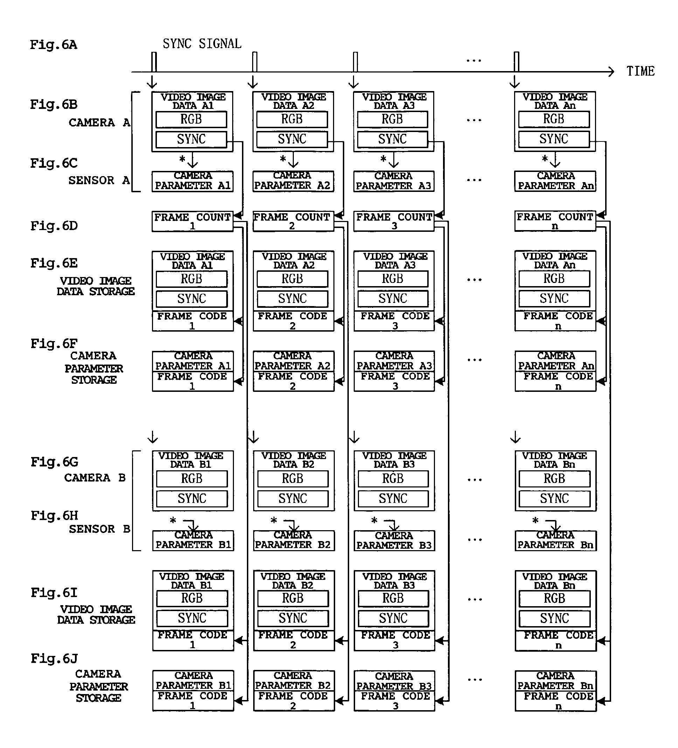

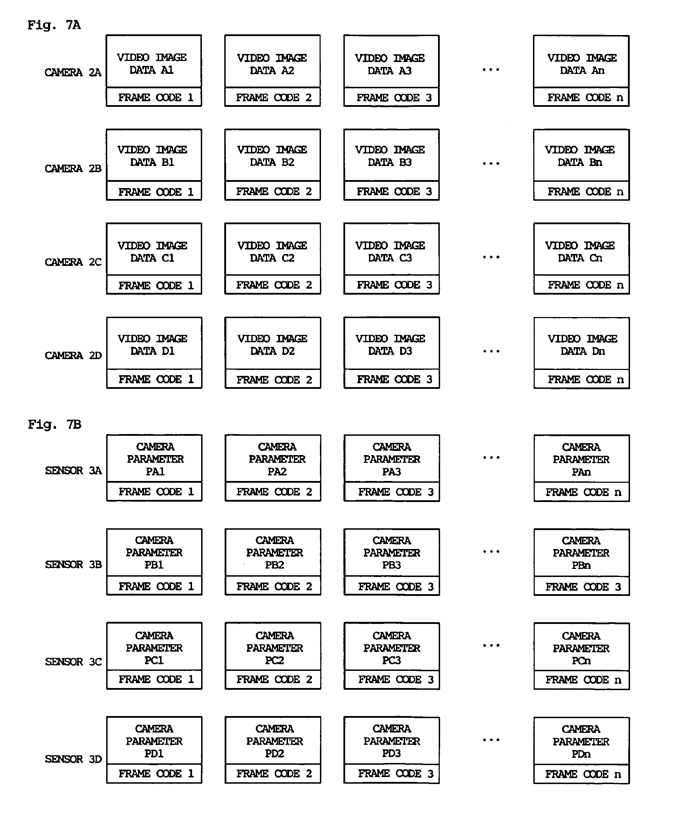

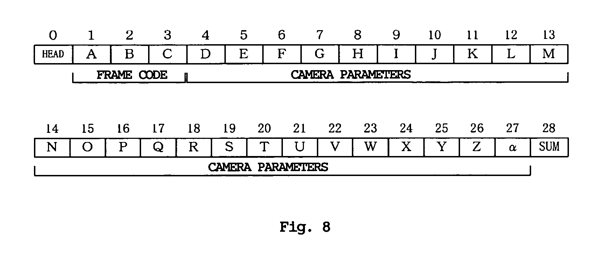

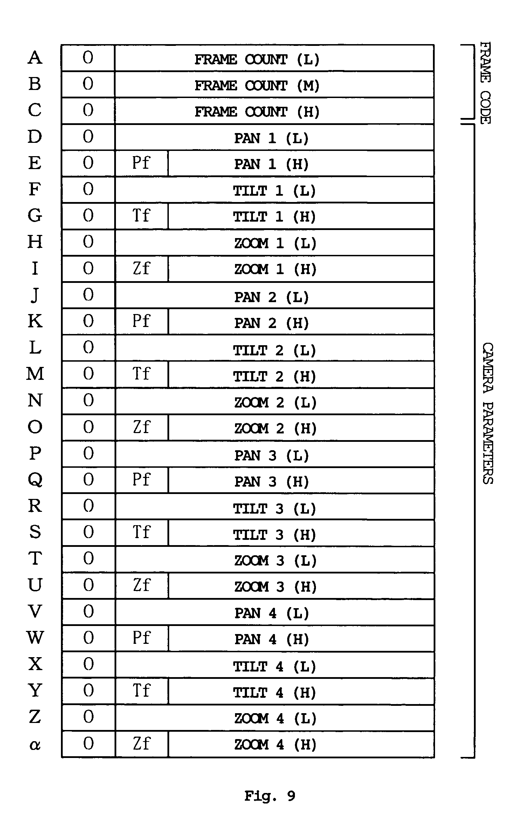

Thereafter, a more detailed constitutional example of the multi perspective video capture system of the present invention will be described by using Figs. 5 to 9. Further, Fig. 5 is a constitutional view serving to illustrate the multi perspective video capture system. Fig. 6 shows an example of a data array on a time axis that serves to illustrate the acquisition state of picture data and camera parameters of the present invention. Fig. 7 shows an example of picture data and camera parameters that are stored in the storage of the present invention. Fig. 8 shows an example of the format of video image data and camera parameter communication data. Fig. 9 shows an example of the structure of the camera parameter communication data.

In Fig. 5, the multi perspective video capture system 1 comprises a plurality of cameras 2 (Fig. 5 shows cameras 2A to 2D); sensors 3 (Fig. 5 shows sensors 3A to 3D) for acquiring camera parameters of each camera 2; synchronizer 4 (synchronizing signal generator 4a, distributor 4b) for acquiring a moving image by synchronizing the plurality of cameras 2; a data collection device 5 for collecting camera parameters from each sensor 3; data appending device 6 (communication data controller 6a and RGB superposition means 6b) that make associations between video image data of each camera 2 and between video image data and camera parameters, and a frame counter device 7 that outputs a frame count as information for making an association. The multi perspective video capture system 1 further comprises video image data storage 11 for storing video image data outputted by the data appending device 6 and camera parameter storage 12 for storing camera parameters.

The synchronizer 4 divides the synchronization signal generated by the synchronizing signal generator 4a to the respective cameras 2A to 2D by means of the distributor 4b. Each of the cameras 2A to 2D performs imaging on the basis of the synchronization signal and performs acquisition of the video image data for each frame. In Fig. 6, Fig. 6B shows video image data that is acquired by camera A and outputs the video image data A1, A2, A3, ..., and An, in frame units in sync with the synchronization signal. Similarly, Fig. 6G displays video image data acquired by camera B and outputs the video image data B1, B2, B3, ..., and Bn in frame units in sync with the synchronization signal.

The picture data of each frame unit contains an RGB signal and SYNC signal (vertical synchronization signal), for example, and the SYNC signal counts the frames and is used in the generation of the frame count that makes associations between the frames and between the video image data and camera parameters. Further, the RGB signal may be a signal form that is either an analog signal or digital signal.

Further, the synchronization signal may be outputted in frame units or for each of a predetermined number of frames. When the synchronization signal is outputted in each of a predetermined number of frames, frame acquisition between synchronization signals is performed with the timing of each camera and frame acquisition between cameras is synchronized by means of the synchronization signal for each of a predetermined number of frames.

The data collector 5 collects camera parameters (camera pan information, tilt information, and zoom information) that is detected by the sensors 3 (attitude sensor 3a and lens sensor 3b) provided for each camera. Further, each sensor 3 produces an output in the signal form of an encoder pulse that is outputted by a rotary encoder or the like, for example. The encoder pulse contains information on the rotation angle and rotation direction with respect to the camera platform of the pan and tilt and contains information on the movement (or rotation amount of the zoom mechanism) and direction of the zoom.

The data collector 5 captures the encoder pulse outputted by each of the sensors 3A to 3D in sync with the SYNC signal in the video image data (vertical synchronization signal) and communicates serially with the data appending device 6.

Fig. 6C shows the camera parameters of the sensor 3A that are collected by the data collector. Camera parameter PA1 is read in sync with the SYNC signal (vertical synchronization signal) of the video image data A1 and the subsequent camera parameter PA2 is read in sync with the SYNC signal (vertical synchronization signal) of the video image data A2, and reading is similarly sequentially performed in sync with the SYNC signal (vertical synchronization signal) of the respective video image data.

The SYNC signal (vertical synchronization signal) that is used as a synchronization signal when the camera parameters are read employs video image data that is acquired from one camera among a plurality of cameras. In the example shown in Figs. 5 and 6, an example that employs the video image data of camera 2A is shown.

Therefore, as for the camera parameters of the sensor 3B collected by the data collector, as shown in Fig. 6H, the camera parameter PB1 is read in sync with the SYNC signal (vertical synchronization signal) of the video image data A1 and the subsequent camera parameter PB2 is read in sync with the SYNC signal (vertical synchronization signal) of the video image data A2 and, similarly, reading is sequentially performed in sync with the SYNC signal (vertical synchronization signal) of the video image data An of camera 3A. As a result, synchronization of the camera parameters of the respective cameras 3A to 3D collected in the data collector 5 can be performed.

The frame counter device 7 forms and outputs a frame count as information for making associations in each of the frame units between the video image data of each of the cameras 2A to 2D and associations in each of the frame units between the video image data and camera parameters. The frame count acquires video image data from one camera among a plurality of cameras 2, f or example , and is acquired by counting each of the frames of the video image data. The capture of the video image data may employ an external signal of a synchronization signal generation device or the like, for example, as the synchronization signal. In the example shown in Figs. 5 and 6, an example employing the video image data of the camera 2A is shown.

Fig. 6C shows a frame count that is acquired on the basis of the video image data A1 to An, .... Further, here, for the sake of expediency in the description, an example is shown in which frame count 1 is associated with the frames of the video image data A1, frame count 2 is associated with the frames of the subsequent video image data A2, and the subsequent frame counts are increased. However, the initial value of the frame count and the increased number (or reduced number) of the count can be optional. Further, the resetting of the frame counter can be performed at an optional time by operating a frame counter reset pushbutton or when the power supply is turned ON.

The data collector 5 adds the frame count to the collected count parameter and communicates the frame count to the data appending device 6.

The data appending device 6 comprise communication data controller 6a and an RGB superposition device 6b. The data appending device 6 can also be constituted by a personal computer, for example.

The communication data controller 6a receive information on the camera parameters and the frame count from the data collector 5, stores same in the camera parameter storage 12, and extracts information on the frame count.

The RGB superposition device 6b captures video image data from each of the cameras 2A to 2D, captures the frame count from the communication data controller 6a, superposes the frame count on the RGB signal of the video image data, and stores the result in the video image data storage 11. The superposition of the frame count can be performed by rendering frame code by encoding the frame count and then adding same to the part of the scanning signal constituting the picture data that is not an obstacle to signal regeneration, for example.

Figs. 6E and 6I show a storage state in which the video image data and frame count are stored in the video image data storage. For example, where the video image data of the camera 2A is concerned, as shown in Fig. 6E, the frames of the video image data A1 are stored with frame count 1 superposed as frame code 1, the frames of the video image data A2 are stored with frame count 2 superposed as frame code 2 and, in sequence thereafter, storage is performed with the superposition of the frame codes corresponding with the video image data. Further, where the video image data of camera 2B is concerned, as shown in Fig. 6I, the frames of the video image data B1 are stored with frame count 1 superposed as frame code 1, the frames of the video image data B2 are stored with frame count 2 superposed as frame code 2 and, in sequence thereafter, storage is performed with the superposition of the frame codes corresponding with the video image data. So too for the video image data of multiple cameras, storage is performed with the superposition of frame code corresponding with video image data. By performing storage with the superposition of frame code on the video image data, synchronization of the frame units of the respective video image data acquired by a plurality of cameras is possible.

Figs. 6F and 6J show a storage state in which the camera parameters and frame count are stored in the camera parameter storage. For example, where the camera parameters of sensor 3A are concerned, as shown in Fig. 6F, the camera parameter PA1 is stored with frame count 1 superposed as frame code 1, the frames of the camera parameter PA2 are stored with camera count 2 superposed as frame code 2 and, sequentially thereafter, storage is performed with the superposition of the frame codes corresponding with the camera parameters. Further, where the camera parameters of sensor 3B are concerned, as shown in Fig. 6J, the camera parameter PB1 is stored with frame count 1 superposed as frame code 1, the frames of the camera parameter PB2 are stored with frame count 2 superposed as frame code 2 and, in sequence thereafter, storage is performed with the superposition of the frame code corresponding with the picture camera parameters. By performing storage with the superposition of frame code on the camera parameters, synchronization of the frame units of the video image data of a plurality of cameras and the camera parameters of a plurality of sensors is possible.

Fig. 7 shows examples of video image data that is stored by the video image data storage and examples of camera parameters that are stored by the camera parameter storage.

Fig. 7A is an example of video image data that is stored in the video image data storage and is shown for the cameras 2A to 2D. For example, the video image data of the camera 2A is stored with the video image data A1 to An and the frame codes 1 to n superposed in each of the frames.

Furthermore, Fig. 7B shows an example of camera parameters that are stored in the camera parameter storage for the sensors 3A to 3D. For example, the camera parameters of sensor 3A are stored with the camera parameters PA1 to PAn and the frame codes 1 to n superposed for each frame.

The video image data and camera parameters stored in the respective storage make it possible to extract synchronized data of the same time by using added frame codes.

An example of the data constitution of the camera parameters will be described next by using Figs. 8 and 9.

Fig. 8 shows an example of the format of the communication data of the camera parameters. In this example, 29 bytes per packet are formed. The 0th byte HED stores header information, the first to twenty-eighth bytes A to a store data relating to the camera parameters, and the twenty-ninth byte SUM is a checksum. Data checking is executed by forming an AND from a predetermined value and the total value of the 0th byte (HED) to the twenty-seventh byte (a).

Further, Fig. 9 is an example of communication data of the camera parameters. The data of the frame count is stored as A to C, the camera parameters acquired from the first sensor are stored as D to I, the camera parameters acquired from the second sensor are stored as J to O, the camera parameters acquired from the third sensor are stored as P to U, and the camera parameters acquired from the fourth sensor are stored as V to a. Codes for the respective pan, tilt and zoom data (Pf (code for the pan information), Tf (code for the tilt information), and Zf (code for the zoom information)) are held as the camera parameters.

Camera calibration will be described next.

In order to specify a three-dimensional position, a three-dimensional position in the real world and a corresponding pixel position in a camera image must be accurately aligned. However, correct association is not possible due to a variety of factors in the real image. As a result, correction is performed by means of calibration. As a correction procedure, a method that estimates camera parameters from a set consisting of points on an associated image and real-world three-dimensional coordinates is employed. As this method, a method known as the Tsai algorithm that finds the physical amount of the attitude and position of the camera and the focal position by also considering the distortion of the camera is known. In the case of the Tsai algorithm, a set of points on a multiple-point world coordinate system and points on image coordinates that correspond with the former points are used. As external parameters, a rotational matrix (three parameters) and parallel movement parameters (three parameters) are found and, as internal parameters, the focal length f, lens distortion ?1, ?2, scalar coefficient sx, and image origin (Cx, Cy) are found. The rotational array, parallel movement array and focal length are for variation at the time of photography, and the camera parameters are recorded together with video image data.

Calibration is performed by photographing a reference object by means of a plurality of cameras and using a plurality of sets of points on the reference object corresponding with pixel positions on the image of the photographed reference object. The calibration procedure photographs the object whose three-dimensional position is already known, acquires camera parameters by making an association with points on the image , acquires a target object on the image, and calculates the three-dimensional position of the target object on the basis of the camera parameters obtained by individual cameras and the position of the target object acquired on the image.

The calibration that is conventionally performed corrects the camera parameters of a fixed camera. On the other hand, in the case of the multi perspective video capture system of the present invention, pan, tilt, and zoom are performed during photography, and the camera parameters change. Thus, when the pan, tilt and zoom of the camera change, there are no new problems with the fixed camera.

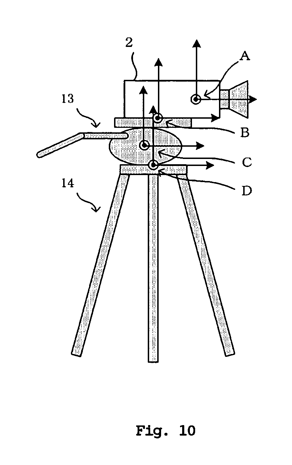

Fig. 10 is a schematic view that serves to illustrate the relationship between the center of revolution of the camera and the focal position of the camera. In Fig. 10, A is the focal point of the camera, B is the center position B of the pan rotation of the camera, and C is the center position of the tilt rotation of the camera. Camera 2 comprises a camera platform 13 that provides rotatable support on at least the two axes of pan and tilt, and a tripod 14 that rotatably supports the camera platform 13. Each of the center positions B, C, and D and the focal point A of the camera do not necessarily match. Hence, pan and tilt and so forth do not rotate about the focal point of the camera and instead rotate about the axis of rotation of the part that fixes the camera of the camera platform or the like.

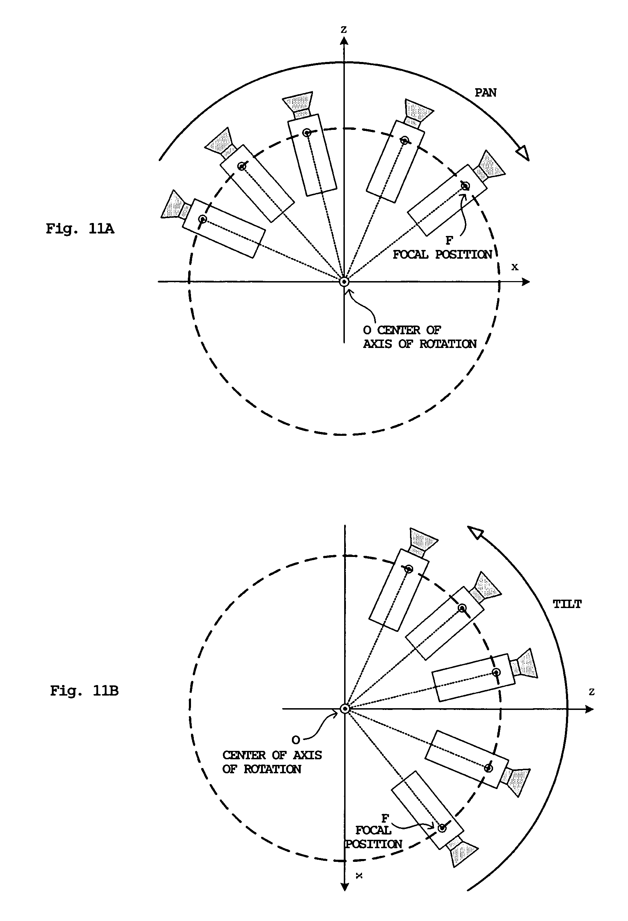

Fig. 11 is a schematic view that serves to illustrate the relationship between the center of revolution and the focal position of the camera. Further, the camera is described hereinbelow as being fixed accurately to the installation center position of the tripod. As shown in Fig. 11, the relationship between one point on the circumference and the center coordinate of the circle is maintained between the focal position of the camera, and the pan rotation coordinate system, and the focal position of the camera and the tilt rotation coordinate system. Fig. 11A shows the relationship between the center O of the axis of rotation and the focal position F of the camera in a case where the camera is panned, and Fig. 11B shows the relationship between the center O of the axis of rotation and the focal position F of the camera in a case where the camera is tilted.

As shown in Fig. 11, because the center O of the axis of rotation and the focal position F of the camera do not match, when rotation takes place about the center O of the axis of rotation, the focal position F of the camera is displaced in accordance with this rotation. As a result of the displacement of the focal position F, displacement is produced between a point on the photographic surface of the camera and a real three-dimensional position, an error is produced in the camera parameters thus found, and an accurate position cannot be acquired. In order to correct the camera parameters, it is necessary to accurately determine the positional relationship of the axis of rotation and the focal point of the camera

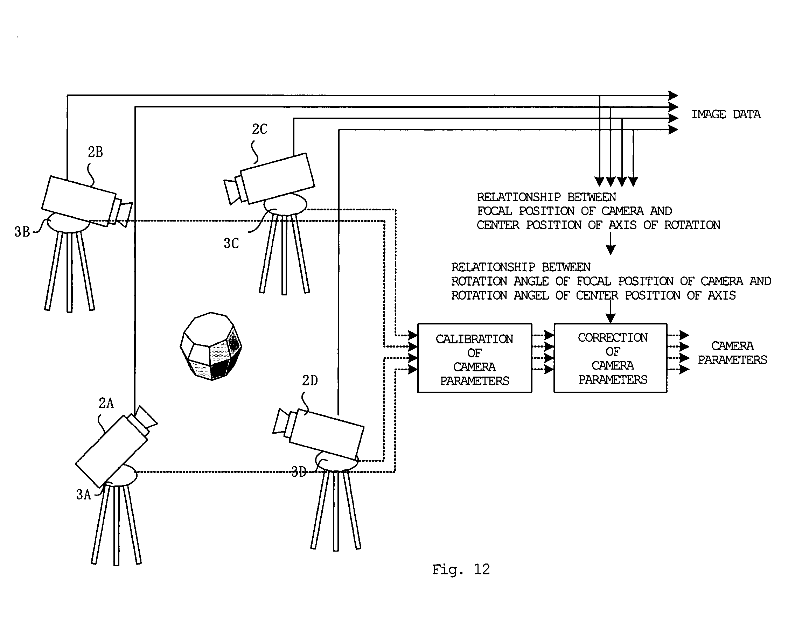

Fig. 12 is a schematic view that serves to illustrate the correction of the camera parameters in the calibration of the present invention. Further, although Fig. 12 shows an example with four cameras which are the cameras 2A to 2D as the plurality of cameras, an optional number of cameras can be obtained.

In Fig. 12, video image data is acquired from the plurality of cameras 2A to 2D and camera parameters are acquired from the sensors provided for each camera. In a picture system such as a conventional motion capture picture system, camera parameters that are acquired from each of the fixed cameras are calibrated on the basis of the positional relationship between a predetermined real position and position on an image (single dot-chain line in Fig. 12).

On the other hand, in the case of the multi perspective video capture system of the present invention, displacement of the camera parameters produced as a result of the camera panning, tilting, and zooming is corrected on the basis of the relationship between the camera focal position and the center position of the axis of rotation. Correction of the camera parameters is performed for each of the frames by finding the relationship between the focal position of the camera and the center position of the axis of rotation on the basis of the camera image data, finding correspondence between the camera parameters before and after correction from this positional relationship, and converting camera parameters that are calibrated on the basis of this correspondence.

Further, the relationship between calibration and the camera focal position and center position of the axis of rotation can be acquired by imaging the reference object and is found beforehand before acquiring image data.

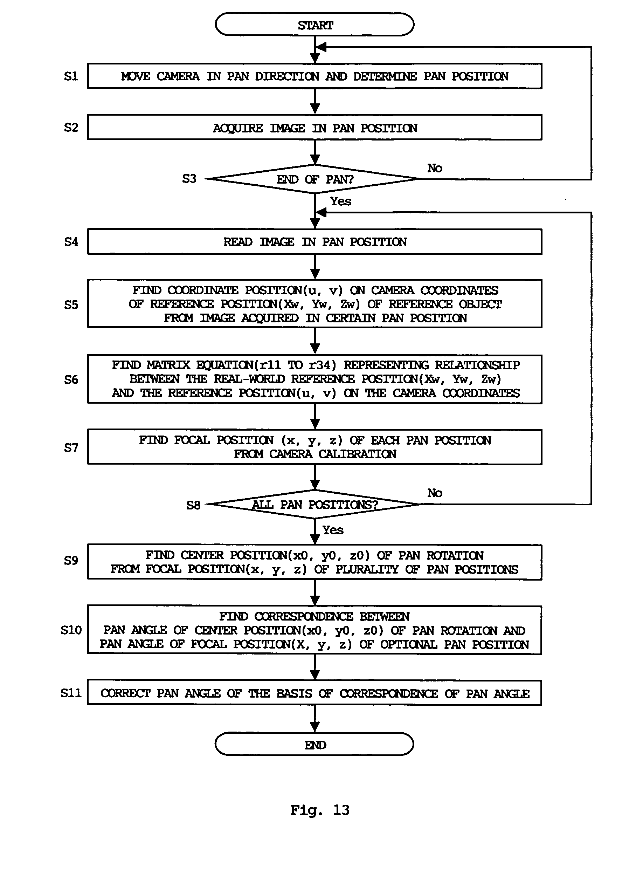

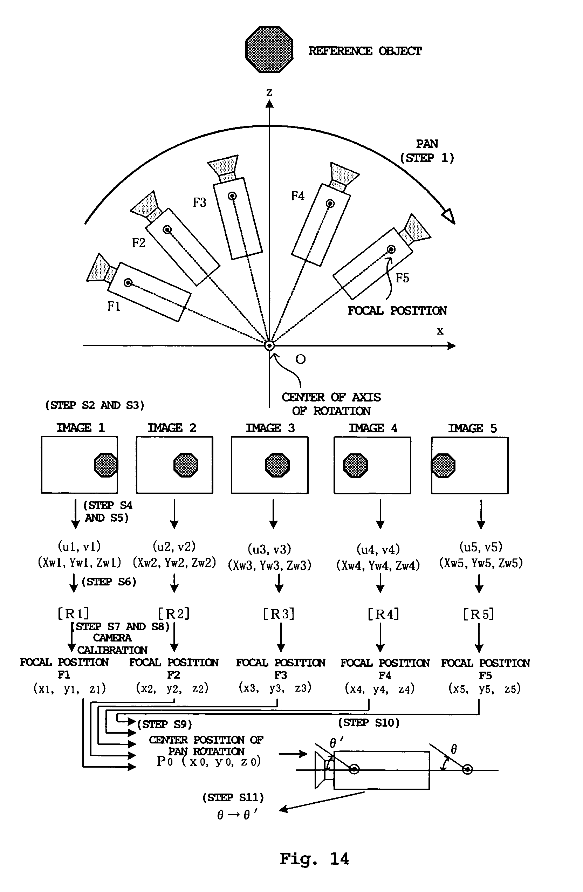

Thereafter, the procedure to correct the camera parameters will be described in accordance with the flowchart of Fig. 13 and the explanatory diagram of Fig. 14. Further, the number of S in Fig. 14 corresponds with the number of S in the flowchart.

In Fig. 11, if it is possible to acquire the positional coordinates of a plurality of focal points when the camera is panned (or tilted), the pan (or tilt) rotation coordinate values can be calculated and the relationship between the positional coordinates of the focal points and the pan (or tilt) rotation coordinate values can be found from the pan (or tilt) rotation coordinate values. The camera parameters acquired from the sensors are rendered with the center position of the axis of rotation serving as the reference and, therefore, camera parameters with the position of the focal point serving as the reference can be acquired by converting the camera parameters by using this relationship.

Because the same is true for tilt, pan will be described below by way of example.

First, the center position of the rotation is found by means of steps S1 to S9. The pan position is determined by moving the camera in the pan direction. The pan position can be an optional position (step S1). An image is acquired in the pan position thus determined. Thereupon, a reference object is used as the photographic target in order to perform calibration and correction (step S2). A plurality of images is acquired while changing the pan position. The acquired number of images can be an optional number of two or more. Fig. 14 shows images 1 to 5 as the acquired image (step S3).

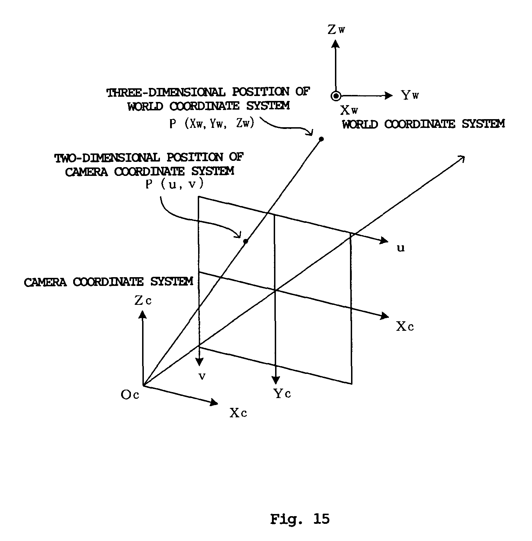

An image of a certain pan position is read from the acquired image (step S4) and the coordinate position (u, v) on the camera coordinates of the reference position (Xw, Yw, Zw) of the reference object is found from the image thus read. Fig. 15 shows the relationship between a three-dimensional world coordinate system representing the coordinates of the real world and a two-dimensional coordinate system of a camera. In Fig. 15, the three-dimensional position P (Xw, Yw, Zw) in a world coordinate system corresponds to P (u, v) in the camera two-dimensional coordinate system. Correspondence can be found with the reference position found on the reference object serving as the indicator (step S5).

Which position in the real world is projected onto which pixel on the camera image can be considered according to the pinhole camera model in which all the light is collected at one point (focal point) as shown in Fig. 15, and the relationship between the three-dimensional position P (Xw, Yw, Zw) of the world coordinate system and P (u,v) of a two-dimensional coordinate system on a camera image can be expressed by the following matrix equation.

$$
\begin{pmatrix} u \\ v \\ 1 \end{pmatrix} = \begin{pmatrix} r11 & r12 & r13 & r14 \\ r21 & r22 & r23 & r24 \\ r31 & r32 & r33 & r34 \end{pmatrix} \begin{pmatrix} Xw \\ Yw \\ Zw \\ 1 \end{pmatrix}
$$

Twelve values among r11 to r34 which are unknown values in the matrix equation can be found by using at least six sets of sets of correspondence between a known point (Xw, Yw, Zw) and point (u,v) (step S6).

Calibration of the camera parameters is performed by correcting camera parameters by using the values r11 to r34 thus found. The camera parameters include internal variables and external variables. Internal variables include the focal length, image center, image size, and strain coefficient of the lens, for example. External variables include the rotational angles of pan and tile and so forth and the camera position, for example. Here, the focal position (x,y,z) of the pan position is found by the calibration (step S7).

The process of steps S4 to S7 is repeated for the image that is acquired in the process of steps S1 to S3, and the focal position in the pan position is found. Fig. 14 shows a case where the focal positions F1 (x1, y1, z1) to F5 (x5, y5, z5) are found from images 1 to 5. Further, at least three points may be found in order to calculate the center of the axis of rotation. However, the positional accuracy of the center of the axis of rotation can be raised by increasing the focal position used in the calculation (step S8).

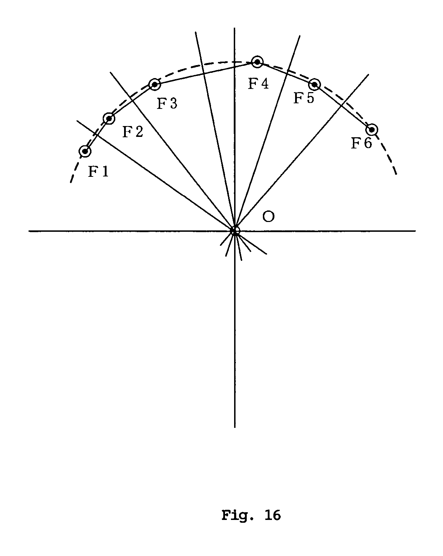

Thereafter, the center position O (x0, y0, z0) of the pan rotation is found from the focal position thus found. Fig. 16 serves to illustrate an example of the calculation of the center position from the focal position.

Two optional points are calculated from the plurality of focal positions found and a vertical bisector is acquired as a straight line linking two points. At least two vertical bisectors are found and the center position O (x0, y0, z0) of the pan rotation is found from the point of intersection between these vertical bisectors.

Further, in cases where two or more bisectors are found, the average of the positions of the intersecting points is found and this position then constitutes the center position O (x0, y0, z0) of the pan rotation (step S9).

Because the center position O (x0, y0, z0) of the pan rotation and the respective focal positions are found as a result of the above process, correspondence between the rotation angle ? of the pan of the center position O of the pan rotation and the rotation angle ?' of the pan of the respective focal positions can be found geometrically (step S10). The pan rotation angle is corrected on the basis of the correspondence thus found (step S11).

Although pan is taken as an example in the above description, correction can be performed in the same way for tilt.

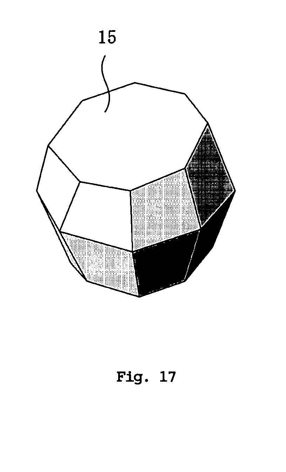

Fig. 17 is an example of a reference object. In order to increase the accuracy of the correction, it is necessary to acquire various angles (pan angle, tilt angle) for each camera and it is desirable to acquire these angles automatically. In such automatic acquisition, in order to acquire correspondence between an actual three-dimensional position and a two-dimensional position on the photographic surface of the camera, it is necessary for a reference position to be imaged even in a case where the oscillation angle of pan and tilt is large.

For this reason, the reference object is desirably of a shape such that the reference position is reproduced on the photographic surface even at large pan and tilt oscillation angles. The reference object 15 in Fig. 17 is an example. The reference object has an octagonal upper base and lower base, for example, the upper and lower bases being linked by side parts on two levels. The parts of each of the levels are constituted by eight square faces and the diameter of the part at which the levels adjoin one another is larger than the diameter of the upper and lower bases. As a result, each apex is a protruding state and, when the apex is taken as the reference position, position detection can be rendered straightforward. Each face may be provided with a lattice shape (checkered flag) pattern.

Further, this shape is an example and the upper and lower bases are not limited to having an octagonal shape and may instead have an optional multisided shape. In addition, the number of levels may be two or more. Even in cases where the oscillation angle of pan and tilt is increased as the number of multisided shapes and the number of levels are increased, reproduction of the reference position is straightforward on the photographic screen.

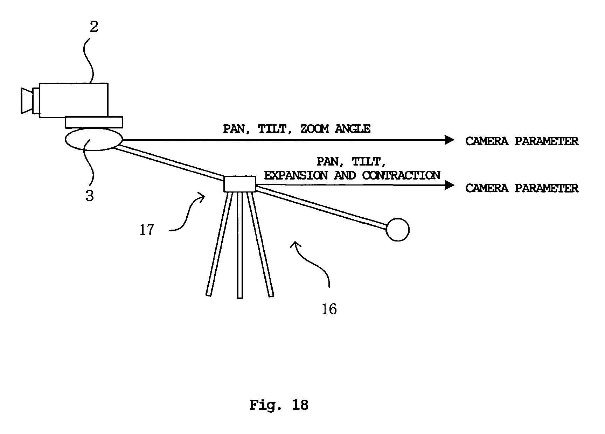

A case where the camera itself is moved in a space will be described next. By moving a camera in three-dimensions in a space, concealment of part of the reference object and photographic target can be prevented. A crane can be used as means for moving the camera in three dimensions in a space. Fig. 18 shows an example in which the camera of the present invention is moved three-dimensionally by means of a crane.

The crane attaches an expandable rod to the head portion of a support part such as a tripod or similar and can be controlled remotely in three-dimensions while the camera always remains horizontal. Further, the pan and tilt of the camera can be controlled in the same position as the control position of the crane and the zoom of the camera can be controlled by means of manipulation via a camera control unit.

Furthermore, by providing the camera platform 17 that supports the rod with a sensor for detecting the pan angle, tilt angle and expansion, the operating parameters of the crane can be acquired and can be synchronized and stored in association with the picture data in the same way as the camera parameters.

According to the present invention, synchronized frame number data is superposed and written to the recording device as frame data (video image data) outputted by the camera at the same time as a signal (gain lock signal) for frame synchronization is sent to each camera. Similarly, pan, tilt, zoom, and position data for the camera itself are acquired from a measurement device that is mounted on the camera in accordance with a synchronization signal. Even when this camera parameter data is acquired in its entirety every time, for example, 4 byte $\times$ 6 data is acquired at a rate of 60 frames every second, meaning that this is only 14400 bits per second, which can also be transmitted by a camera by using an ordinary serial line. In addition, the camera parameter data from each camera is a data amount that can be collected adequately by using a single computer but even if around eight video cameras are used and frame numbers are added, because the data amount is extremely small at around 200 bytes at a time and 12 kilobytes per second, storage of the data amount on a recordable medium such as a disk is also straightforward. That is, even when the camera parameters are recorded separately, because the frame acquisition times and frame numbers are strictly associated, analysis is possible. In addition, according to the present invention, optional data that is acquired by another sensor such as a temperature sensor, for example, can be recorded associated with the frame acquisition time and data analysis in which correspondence with the image is defined can be performed.

In each of the above aspects, the camera parameters may add position information for each camera to pan information, tilt information, and zoom information of each camera. By adding the camera position information, even when the camera itself has moved, the target object and position thereof on the acquired picture data can be found and, even in a case where the target has moved over a wide range, correspondence can be implemented without producing a range in which it is not possible to acquire video image data by means of a small number of cameras rather than installing a multiplicity of cameras.

Moreover, for the camera parameters, in addition to camera attitude information and zoom information, various information on the photographic environment and periphery such as sound information, temperature, and humidity may be stored associated with the video image data. For example, sensors for measuring body temperature, the outside air temperature and a variety of gases and a pressure sensor, and so forth, are provided and measurement data formed by these sensors in addition to the video image data imaged by the camera is captured, and may be stored in association with the picture data. As a result, a variety of data relating to the imaged environment such as the external environment in which people work such as the outside air temperature and atmosphere components and the internal environment such as a person's body temperature and a load such as pressure acting on each part of the person's body can be stored associated at the same time as the video image data and video image data and measurement data of the same time can be easily read and analyzed.

According to an aspect of the present invention, the measurement environment is homogeneous light and it is possible to acquire video information without adding control conditions such as space that is limited to a studio in order to simplify correction.

The video information acquired by the present invention can be applied to an analysis of the movement and attitude of the target object.

As described earlier, according to the present invention, actual movement including an image of the target object can be acquired independently of the measurement environment. Further, according to the present invention, a wide-range picture can be acquired highly accurately.

INDUSTRIAL APPLICABILITY

The present invention can be used in the analysis of a moving body such as a person or thing and in the formation of virtual spaces and can be applied to the fields of manufacturing, medicine, and sport.

**Claims**

1.  A multi perspective video capture system that acquires video information of a target object from multi perspective, comprising:

    a plurality of cameras that are movable in three dimensions and which are capable of following the movement of the target object,
    wherein video image data of a moving image that is obtained by synchronizing the plurality of cameras with one another, camera parameters of each of the cameras, and association information that mutually associates the camera parameters with the video image data of the moving image for each frame are acquired; and
    video image data of the moving image is calibrated by means of corresponding camera parameters on the basis of the association information, and information for analyzing the movement and attitude of the target object is obtained.

2.  The multi perspective video capture system according to claim 1, wherein the video image data of the moving image and camera parameters are stored and the video image data and camera parameters are stored for each frame.

3.  A multi perspective video capture system that acquires video information of a target object from multi perspective, comprising:

    a plurality of cameras that are movable in three dimensions for acquiring video image data of a moving image;
    detector means for acquiring camera parameters of each camera;
    synchronizer for synchronizing the plurality of cameras;
    data appending device for adding association information that makes associations between synchronized moving image video image data of each camera and between moving image video image data and camera parameters; and
    calibrator for calibrating the video image data of each moving image by means of corresponding camera parameters on the basis of the association information and for obtaining information for analyzing the movement and attitude of the target object.

4.  The multi perspective video capture system according to claim 3, comprising:

    Video image data storage for storing, for each frame, video image data to which the association information has been added; and

camera parameter storage for storing camera parameters to which the association information has been added.

5. The multi perspective video capture system according to claim 1 or 3, wherein the association information is a frame count of video image data of a moving image that is acquired from one camera of the plurality of cameras.

6. The multi perspective video capture system according to claim 1 or 3, wherein the camera parameters include camera attitude information of camera pan and tilt and zoom information.

7. The multi perspective video capture system according to claim 6, wherein the camera parameters include two dimensional or three-dimensional position information of the camera.

8. The multi perspective video capture system according to claim 2 or 4, wherein the data stored for each frame includes measurement data.

9. A storage medium for a program that causes a computer to execute control to acquire video image information of a target object from multi perspective, comprising:

   first program encoder that sequentially add a synchronization common frame count to video image data of each frame acquired from a plurality of cameras; and
   second program encoder that sequentially add a frame count corresponding to the video image data to the camera parameters of each camera.

10. The storage medium for a program according to claim 9, wherein the first program encoder include the storing in first storage of video image data to which a frame count has been added.

11. The storage medium for a program according to claim 9, wherein the second program encoder include the storing in second storage of count parameters to which a frame count has been added.

12. The storage medium for a program according to any of claims 9 to 11, wherein the camera parameters include camera attitude information of camera pan and tilt and zoom information.

13. The storage medium for a program according to claim 12, wherein the camera parameters include two-dimensional or three-dimensional position information of the camera.

14. A video image information storage medium that stores picture information of a target object acquired from multi perspective, which stores first picture information in which a synchronization common frame count has been sequentially added to video image data of each frame acquired by a plurality of cameras, and second video image information in which a frame count corresponding with the video image data has been sequentially added to the camera parameters of each camera.

15. The video image information storage medium according to claim 14, wherein the camera parameters include camera attitude information of camera pan and tilt and zoom information.

16. The video image information storage medium according to claim 14, wherein the camera parameters include two-dimensional or three-dimensional position information of the camera.

17. A camera parameter correction method, comprising the steps of:

   acquiring an image in a plurality of rotational positions by panning and/or tilting a camera;
   finding correspondence between the focal position of the camera and the center position of the axis of rotation from the image;
   acquiring the camera parameters of the camera; and
   correcting the camera parameters on the basis of the correspondence.

Fig. 1

14

Fig. 2

FIG. 3A

FIG. 3B

Fig. 4A    Fig. 4B    Fig. 4C

Fig. 4D

C-U (ZOOM+TILT)    C-R-D (ZOOM+PAN+TILT)

C-L (ZOOM+PAN)    C (ZOOM)    C-R (ZOOM+PAN)

C-D (ZOOM+TILT)

Fig. 5

EP 1 580 520 A1

Fig.6A SYNC SIGNAL

... TIME

Fig.6B
CAMERA A

Fig.6C
SENSOR A

Fig.6D

Fig.6E
VIDEO IMAGE
DATA STORAGE

Fig.6F
CAMERA
PARAMETER
STORAGE

Fig.6G
CAMERA B

Fig.6H
SENSOR B

Fig.6I
VIDEO IMAGE
DATA STORAGE

Fig.6J
CAMERA
PARAMETER
STORAGE

Fig. 7A

| CAMERA 2A | VIDEO IMAGE DATA A1 | VIDEO IMAGE DATA A2 | VIDEO IMAGE DATA A3 | ... | VIDEO IMAGE DATA An |
| | FRAME CODE 1 | FRAME CODE 2 | FRAME CODE 3 | | FRAME CODE n |
| CAMERA 2B | VIDEO IMAGE DATA B1 | VIDEO IMAGE DATA B2 | VIDEO IMAGE DATA B3 | ... | VIDEO IMAGE DATA Bn |
| | FRAME CODE 1 | FRAME CODE 2 | FRAME CODE 3 | | FRAME CODE n |
| CAMERA 2C | VIDEO IMAGE DATA C1 | VIDEO IMAGE DATA C2 | VIDEO IMAGE DATA C3 | ... | VIDEO IMAGE DATA Cn |
| | FRAME CODE 1 | FRAME CODE 2 | FRAME CODE 3 | | FRAME CODE n |
| CAMERA 2D | VIDEO IMAGE DATA D1 | VIDEO IMAGE DATA D2 | VIDEO IMAGE DATA D3 | ... | VIDEO IMAGE DATA Dn |
| | FRAME CODE 1 | FRAME CODE 2 | FRAME CODE 3 | | FRAME CODE n |

Fig. 7B

| SENSOR 3A | CAMERA PARAMETER PA1 | CAMERA PARAMETER PA2 | CAMERA PARAMETER PA3 | ... | CAMERA PARAMETER PAn |
| | FRAME CODE 1 | FRAME CODE 2 | FRAME CODE 3 | | FRAME CODE n |
| SENSOR 3B | CAMERA PARAMETER PB1 | CAMERA PARAMETER PB2 | CAMERA PARAMETER PB3 | ... | CAMERA PARAMETER PBn |
| | FRAME CODE 1 | FRAME CODE 2 | FRAME CODE 3 | | FRAME CODE 3 |
| SENSOR 3C | CAMERA PARAMETER PC1 | CAMERA PARAMETER PC2 | CAMERA PARAMETER PC3 | ... | CAMERA PARAMETER PCn |
| | FRAME CODE 1 | FRAME CODE 2 | FRAME CODE 3 | | FRAME CODE n |
| SENSOR 3D | CAMERA PARAMETER PD1 | CAMERA PARAMETER PD2 | CAMERA PARAMETER PD3 | ... | CAMERA PARAMETER PDn |
| | FRAME CODE 1 | FRAME CODE 2 | FRAME CODE 3 | | FRAME CODE n |

| 0 | 1 | 2 | 3 | 4 | 5 | 6 | 7 | 8 | 9 | 10 | 11 | 12 | 13 |
|---|---|---|---|---|---|---|---|---|---|----|----|----|----|
| HEAD | A | B | C | D | E | F | G | H | I | J | K | L | M |

FRAME CODE     CAMERA PARAMETERS

| 14 | 15 | 16 | 17 | 18 | 19 | 20 | 21 | 22 | 23 | 24 | 25 | 26 | 27 | 28 |
|----|----|----|----|----|----|----|----|----|----|----|----|----|----|----|
| N | O | P | Q | R | S | T | U | V | W | X | Y | Z | $\alpha$ | SUM |

CAMERA PARAMETERS

Fig. 8

| | | | | |
|---|---|---|---|---|
| A | 0 | | FRAME COUNT (L) | FRAME CODE |
| B | 0 | | FRAME COUNT (M) | |
| C | 0 | | FRAME COUNT (H) | |
| D | 0 | | PAN 1 (L) | CAMERA PARAMETERS |
| E | 0 | Pf | PAN 1 (H) | |
| F | 0 | | TILT 1 (L) | |
| G | 0 | Tf | TILT 1 (H) | |
| H | 0 | | ZOOM 1 (L) | |
| I | 0 | Zf | ZOOM 1 (H) | |
| J | 0 | | PAN 2 (L) | |
| K | 0 | Pf | PAN 2 (H) | |
| L | 0 | | TILT 2 (L) | |
| M | 0 | Tf | TILT 2 (H) | |
| N | 0 | | ZOOM 2 (L) | |
| O | 0 | Zf | ZOOM 2 (H) | |
| P | 0 | | PAN 3 (L) | |
| Q | 0 | Pf | PAN 3 (H) | |
| R | 0 | | TILT 3 (L) | |
| S | 0 | Tf | TILT 3 (H) | |
| T | 0 | | ZOOM 3 (L) | |
| U | 0 | Zf | ZOOM 3 (H) | |
| V | 0 | | PAN 4 (L) | |
| W | 0 | Pf | PAN 4 (H) | |
| X | 0 | | TILT 4 (L) | |
| Y | 0 | Tf | TILT 4 (H) | |
| Z | 0 | | ZOOM 4 (L) | |
| α | 0 | Zf | ZOOM 4 (H) | |

Fig. 9

Fig. 10

Fig. 11A

Fig. 11B

IMAGE DATA

RELATIONSHIP BETWEEN
FOCAL POSITION OF CAMERA AND
CENTER POSITION OF AXIS OF ROTATION

RELATIONSHIP BETWEEN
ROTATION ANGLE OF FOCAL POSITION OF CAMERA AND
ROTATION ANGEL OF CENTER POSITION OF AXIS

CALIBRATION
OF
CAMERA
PARAMETERS

CORRECTION
OF
CAMERA
PARAMETERS

CAMERA
PARAMETERS

Fig. 12

START

S1 | MOVE CAMERA IN PAN DIRECTION AND DETERMINE PAN POSITION

S2 | ACQUIRE IMAGE IN PAN POSITION

S3 | END OF PAN? — No

Yes

S4 | READ IMAGE IN PAN POSITION

S5 | FIND COORDINATE POSITION(u, v) ON CAMERA COORDINATES
OF REFERENCE POSITION(Xw, Yw, Zw) OF REFERENCE OBJECT
FROM IMAGE ACQUIRED IN CERTAIN PAN POSITION

S6 | FIND MATRIX EQUATION(r11 TO r34) REPRESENTING RELATIONSHIP
BETWEEN THE REAL-WORLD REFERENCE POSITION(Xw, Yw, Zw)
AND THE REFERENCE POSITION(u, v) ON THE CAMERA COORDINATES

S7 | FIND FOCAL POSITION (x, y, z) OF EACH PAN POSITION
FROM CAMERA CALIBRATION

S8 | ALL PAN POSITIONS? — No

Yes

S9 | FIND CENTER POSITION(x0, y0, z0) OF PAN ROTATION
FROM FOCAL POSITION(x, y, z) OF PLURALITY OF PAN POSITIONS

S10 | FIND CORRESPONDENCE BETWEEN
PAN ANGLE OF CENTER POSITION(x0, y0, z0) OF PAN ROTATION AND
PAN ANGLE OF FOCAL POSITION(X, y, z) OF OPTIONAL PAN POSITION

S11 | CORRECT PAN ANGLE OF THE BASIS OF CORRESPONDENCE OF PAN ANGLE

END

Fig. 13

REFERENCE OBJECT

z

PAN
(STEP 1)

F3

F4

F2

F5

F1

FOCAL POSITION

x

O

CENTER OF AXIS
OF ROTATION

(STEP S2 AND S3)

| IMAGE 1 | IMAGE 2 | IMAGE 3 | IMAGE 4 | IMAGE 5 |

(STEP S4
AND S5)

$(u1, v1)$    $(u2, v2)$    $(u3, v3)$    $(u4, v4)$    $(u5, v5)$
$(Xw1, Yw1, Zw1)$ $(Xw2, Yw2, Zw2)$ $(Xw3, Yw3, Zw3)$ $(Xw4, Yw4, Zw4)$ $(Xw5, Yw5, Zw5)$

(STEP S6)

[R1]    [R2]    [R3]    [R4]    [R5]

(STEP S7 AND S8)
CAMERA
CALIBRATION

FOCAL POSITION    FOCAL POSITION    FOCAL POSITION    FOCAL POSITION    FOCAL POSITION
F1                F2                F3                F4                F5

$(x1, y1, z1)$   $(x2, y2, z2)$   $(x3, y3, z3)$   $(x4, y4, z4)$   $(x5, y5, z5)$

(STEP S9)                      (STEP S10)

CENTER POSITION OF
PAN ROTATION
$P0 (x0, y0, z0)$

$\theta'$        $\theta$

(STEP S11)

$\theta \rightarrow \theta'$

Fig. 14

THREE-DIMENSIONAL POSITION OF
WORLD COORDINATE SYSTEM
P (Xw, Yw, Zw)

Zw

Yw

Xw

WORLD COORDINATE SYSTEM

TWO-DIMENSIONAL POSITION OF
CAMERA COORDINATE SYSTEM
P (u, v)

u

CAMERA COORDINATE SYSTEM

Zc

Xc

v

Yc

Oc

Xc

Fig. 15

Fig. 16

15

Fig. 17

2

PAN, TILT, ZOOM ANGLE → CAMERA PARAMETER

PAN, TILT,
EXPANSION AND CONTRACTION → CAMERA PARAMETER

3

17

16

Fig. 18

# EP 1 580 520 A1

<table>
<tr><th colspan="3">INTERNATIONAL SEARCH REPORT</th><th>International application No.<br>PCT/JP03/16078</th></tr>
</table>

**A. CLASSIFICATION OF SUBJECT MATTER**
Int.Cl$^7$ G01B11/00

According to International Patent Classification (IPC) or to both national classification and IPC

**B. FIELDS SEARCHED**

Minimum documentation searched (classification system followed by classification symbols)
Int.Cl$^7$ G01B11/00-11/30, G06T7/00, H04N5/232

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-257543 A (Monbu Kagaku-sho Koku Uchu Gijutsu Kenkyushocho),<br>11 September, 2002 (11.09.02),<br>Full text; all drawings<br>(Family: none) | 1-16 |
| Y | JP 2921718 B2 (Fanuc Ltd.),<br>19 July, 1999 (19.07.99),<br>Full text; all drawings<br>& JP 5-12409 A      & WO 93/1558 A1<br>& EP 547245 A1      & US 6356671 B1 | 1-16 |

| | |
|---|---|
| ☒ Further documents are listed in the continuation of Box C. | ☐ See patent family annex. |

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>23 March, 2004 (23.03.04) | Date of mailing of the international search report<br>13 April, 2004 (13.04.04) |
| Name and mailing address of the ISA/<br>Japanese Patent Office | Authorized officer |
| Facsimile No. | Telephone No. |

Form PCT/ISA/210 (second sheet) (July 1998)

32

**EP 1 580 520 A1**

### INTERNATIONAL SEARCH REPORT

International application No.

PCT/JP03/16078

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2677312 B2 (Director General, Agency of Industrial Science and Technology), 17 November, 1997 (17.11.97), Full text; all drawings<br>& JP 4-281679 A  & EP 509208 A2<br>& US 5267034 A | 17<br>1-16 |

Form PCT/ISA/210 (continuation of second sheet) (July 1998)

**EP 1 580 520 A1**

| INTERNATIONAL SEARCH REPORT | International application No. |
|---|---|
| | PCT/JP03/16078 |

**Box I Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

```
   Claims 1-16 relate to the technology of storing image data by a plurality
of cameras and camera parameters of respective cameras so as to be able to
be associated with each other.

   Claim 17 relates to a method of correcting camera parameters.
```

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

Form PCT/ISA/210 (continuation of first sheet (1)) (July 1998)